(19) **Europäisches Patentamt / European Patent Office / Office européen des brevets**

(11) **EP 4 203 136 A1**

(12) **EUROPEAN PATENT APPLICATION**
published in accordance with Art. 153(4) EPC

(43) Date of publication:
**28.06.2023 Bulletin 2023/26**

(21) Application number: **20954416.2**

(22) Date of filing: **23.09.2020**

(51) International Patent Classification (IPC):
**H01M 10/0587** (2010.01)      **H01M 4/02** (2006.01)

(52) Cooperative Patent Classification (CPC):
**H01M 4/02; H01M 10/0587; Y02E 60/10; Y02P 70/50**

(86) International application number:
**PCT/CN2020/117035**

(87) International publication number:
**WO 2022/061562 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
- **YUANYIN, Mingyue**
  **Ningde, Fujian 352100 (CN)**
- **YAN, Dongyang**
  **Ningde, Fujian 352100 (CN)**
- **ZENG, Qiao**
  **Ningde, Fujian 352100 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE**

(57)      Some embodiments of this application provide an electrochemical apparatus and an electronic apparatus. The electrochemical apparatus includes an electrode assembly, where the electrode assembly includes a first electrode plate, a second electrode plate and a separator, and the separator is disposed between the first electrode plate and the second electrode plate. The first electrode plate includes a current collector and an active material layer, the current collector includes a first zone and a second zone, the second zone is provided with an active material layer, the first zone includes a third zone and a fourth zone, the third zone is arranged in overlap with the separator, and the fourth zone is provided with a conductive layer. In some embodiments of this application, the conductive layer is disposed in a zone of the current collector that has no active material layer disposed thereon and that does not overlap the separator, so that the electrode plates are bonded together to realize a conductive connection, thereby eliminating the need for a flattening process before tab welding, and reducing a risk of poor tab welding.

FIG. 2

EP 4 203 136 A1

## Description

### TECHNICAL FIELD

This application relates to the field of energy storage technologies, and in particular, to an electrochemical apparatus and an electronic apparatus.

### BACKGROUND

With development of electrochemical apparatuses towards high performance, greater challenges are posed to aspects of the electrode assembly such as rate performance and volumetric energy density. Currently, the full-tab design is mostly used to achieve high rate charging and discharging of the electrode assembly. However, a full-tab electrode assembly generally undergoes a flattening process before welding, that is, the full-tab is flattened by ultrasonic flattening, mechanical vibration, or rubbing to form welding locations for welding with a current collector plate. However, the flattening process is prone to risks of irregular welding locations and poor welding.

### SUMMARY

This application optimizes the electrode assembly structurally to mitigate the risks of welding of the full-tab electrode assembly and improve internal resistance and volumetric energy density of the electrochemical apparatus.

Embodiments of this application provide an electrochemical apparatus, including an electrode assembly, where the electrode assembly includes a first electrode plate, a second electrode plate, and a separator, and the separator is disposed between the first electrode plate and the second electrode plate. The first electrode plate includes a current collector and an active material layer. The current collector includes a first zone and a second zone, where the second zone is provided with the active material layer, the first zone includes a third zone and a fourth zone, the third zone is arranged in overlap with the separator, and the fourth zone is provided with a conductive layer.

In some embodiments, the first electrode plate further includes an insulation layer disposed on the first zone, and the insulation layer is between the conductive layer and the active material layer.

In some embodiments, the conductive layer has a first width, the fourth zone has a second width, and the first width is less than or equal to the second width.

In some embodiments, the insulation layer has a third width, and the third width is less than or equal to a quarter of the first width.

In some embodiments, a difference between the a thickness of conductive layer and a thickness of the insulation layer is less than or equal to 30 $\mu$m.

In some embodiments, the insulation layer includes at least one of an inorganic particle or a binder, where the inorganic particle includes at least one of aluminum oxide, silicon dioxide, magnesium oxide, barium titanate, titanium dioxide, zirconium dioxide, barium oxide, magnesium hydroxide, or boehmite.

In some embodiments, the first electrode plate, the separator, and the second electrode plate are stacked and wound in multiple layers around a first direction along a winding direction. The first direction is perpendicular to the winding direction, and the first zone located at inner side of the winding structure and the first zone located at outer side of the winding structure are electrically connected through the conductive layers.

In some embodiments, the first zones located at adjacent layers of the winding structure are connected through the conductive layers.

In some embodiments, a thickness of the conductive layer is 100 $\mu$m to 500 $\mu$m.

In some embodiments, the first zone is located at an end part of the current collector in the first direction.

In some embodiments, the conductive layer satisfies at least one of the following characteristics: the conductive layers are arranged spaced apart from each other in the winding direction; and the conductive layers are arranged spaced apart from each other in the first direction.

In some embodiments, the insulation layer satisfies at least one of the following characteristics: the insulation layers are arranged spaced apart from each other in the winding direction; and the insulation layers are arranged spaced apart from each other in the first direction.

In some embodiments, the conductive layers present a plurality of fan-shaped zones from inner sides to outer sides of the winding structure.

In some embodiments, a distance d between an edge of the first zone that is farther away from the active material layer and an edge of the conductive layer that is farther away from the active material layer satisfies $0 \leq d \leq a$ difference between the second width and the first width.

In some embodiments, the electrochemical apparatus further includes a current collector plate, where the current collector plate is electrically connected to the current collector, the current collector plate includes a top plate and a protrusion disposed on the top plate, and the protrusion is located between the first zones of adjacent layers of the winding structure.

In some embodiments, a projection of the protrusion on the top plate and a projection of the conductive layer on the top plate coincide or do not coincide.

In some embodiments, the protrusion includes a conductive part and an insulating part, the conductive part is located between the top plate and the insulating part, and the conductive part is electrically connected to the first zone.

In some embodiments, the electrochemical apparatus further includes a connecting piece, where the connecting piece is electrically connected to the first zone.

In some embodiments, the conductive layer includes a conductive particle, where the conductive particle includes at least one of a silver particle, a gold particle, a copper particle, or a carbon material.

An embodiment of this application further provides an electronic apparatus, including the foregoing electrochemical apparatus, where the electrochemical apparatus is configured to supply power to the electronic apparatus.

In the embodiments of this application, the conductive layer is disposed on a zone of the current collector that has no active material layer disposed thereon and that does not overlap the separator, so that the electrode plates are bonded together to realize a conductive connection, thereby eliminating the need for a flattening process before tab welding, and reducing a risk of poor tab welding.

## BRIEF DESCRIPTION OF DRAWINGS

FIG. 1 is a sectional view of an electrode assembly according to an embodiment of this application.
FIG. 2 is a plan view of an electrode assembly according to an embodiment of this application.
FIG. 3 is a plan view of an electrode assembly according to an embodiment of this application.
FIG. 4 is a three-dimensional diagram of an electrode assembly of a winding structure according to an embodiment of this application.
FIG. 5 is a vertical view of an electrode assembly of a winding structure according to an embodiment of this application.
FIG. 6 is a plan view of an electrode assembly according to an embodiment of this application.
FIG. 7 is a vertical view of an electrode assembly of a winding structure according to an embodiment of this application.
FIG. 8 is a plan view of an electrode assembly according to an embodiment of this application.
FIG. 9 is a plan view of a current collector plate according to an embodiment of this application.
FIG. 10 is a sectional view of a current collector plate according to an embodiment of this application.
FIG. 11 is a plan view of an electrode assembly according to an embodiment of this application.

## DETAILED DESCRIPTION

The following embodiments may enable those skilled in the art to understand this application more comprehensively, but do not limit this application in any way.

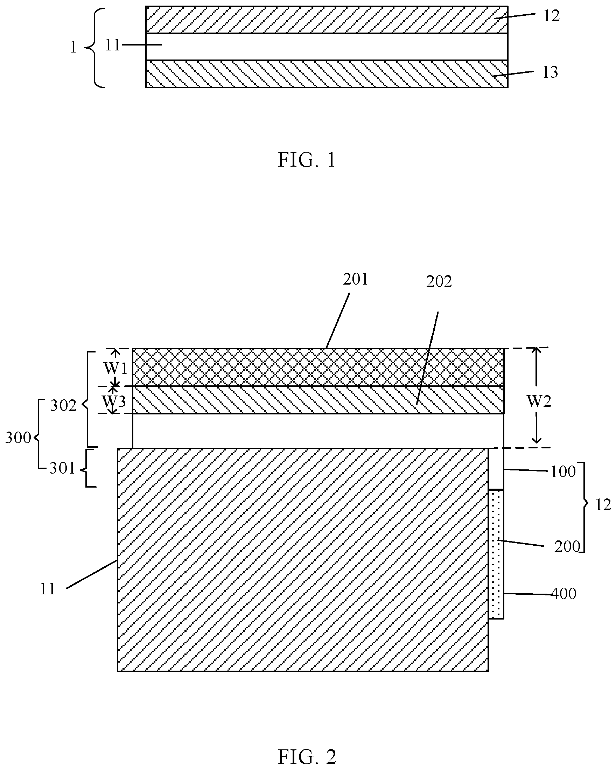

As shown in FIG. 1, an embodiment of this application provides an electrochemical apparatus, where the electrochemical apparatus includes an electrode assembly 1. The electrode assembly 1 includes a separator 11, a first electrode plate 12, and a second electrode plate 13, where the separator 11 is disposed between the first electrode plate 12 and the second electrode plate 13. One of the first electrode plate 12 and the second electrode plate 13 is a positive electrode plate, and the other of the first electrode plate 12 and the second electrode plate 13 is a negative electrode plate. It should be understood that in FIG. 1 and subsequent figures, for purpose of simplicity and clarity, only part of the electrode assembly is shown. For example, the electrode assembly 1 of a winding structure may be obtained by winding the first electrode plate 12, the separator 11, and the second electrode plate 13; and the electrode assembly 1 of a stacked structure may be obtained by stacking a plurality of first electrode plates 12, a plurality of separators 11, and a plurality of second electrode plates 13. In addition, when the electrode assembly 1 is of a winding structure, the plan views in this application correspond to plan expanded views.

FIG. 2 is a plan view of the electrode assembly 1 according to an embodiment of this application. The descriptions below take the first electrode plate 12 as an example, and the second electrode plate 13 may be set accordingly. In some embodiments, as shown in FIG. 2, the first electrode plate 12 includes a current collector 100 and an active material layer 200. In some embodiments, the active material layer 200 is disposed on the current collector 100. The current collector 100 includes a first zone 300 and a second zone 400, and the second zone 400 is provided with the active material layer 200. In some embodiments, the first zone 300 includes a third zone 301 and a fourth zone 302. In some embodiments, the third zone 301 is arranged in overlap with the separator 11, and the fourth zone 302 is provided with a conductive layer 201. In this embodiment of this application, the third zone 301 being arranged in overlap with the separator 11 means that the third zone 301 is orthographically projected in the separator 11. The conductive layer 201 is disposed on the fourth zone 302, so that the first electrode plates 12 are bonded and electrically connected to each other, thereby eliminating the need for a flattening process before tab welding, and reducing a risk of poor tab welding. Additionally, structural stability of the electrochemical apparatus is also enhanced.

In some embodiments, the first electrode plate 12 further includes an insulation layer 202 disposed on the first zone 300, and the insulation layer 202 is located between the conductive layer 201 and the active material layer 200. The insulation layer 202 is disposed on the first zone 300, so that a risk of short circuit, for example, between the conductive layer 201 and the second electrode plate 13 may be reduced.

In some embodiments, the conductive layer 201 has a first width W1, the fourth zone 302 has a second width W2, and the first width W1 is less than or equal to the second width W2. If the first width W1 of the conductive layer 201 is greater than the second width W2 of the fourth zone 302, a risk of short circuit between the conductive layer 201 and the current collector of the second electrode plate 13 for example may be significantly increased.

In some embodiments, the insulation layer 202 has a third width W3, and the third width W3 is less than or equal to a quarter of the first width W1. In this way, a coating area of the active material may be maximized while bonding and insulating effects of the insulation layer 202 are ensured, thereby increasing volumetric energy density of the electrochemical apparatus.

In some embodiments, a difference between a thickness of the conductive layer 201 and a thickness of the insulation layer 202 is less than or equal to 30 μm. If the difference between the thickness of the conductive layer 201 and the thickness of the insulation layer 202 is greater than 30 μm, which means that the thickness of the insulation layer 202 is less than the thickness of the conductive layer 201 for more than 30 μm, the insulation layer 202 may not fully take advantage of its insulation performance, and the risk of the short circuit between the conductive layer 201 and the current collector of the second electrode plate 13 for example is increased.

In some embodiments, the insulation layer 202 includes at least one of an inorganic particle or a binder. In some embodiments, the inorganic particle includes at least one of aluminum oxide, silicon dioxide, magnesium oxide, barium titanate, titanium dioxide, zirconium dioxide, barium oxide, magnesium hydroxide, or boehmite. Use of these inorganic particle is beneficial to penetration of electrolyte.

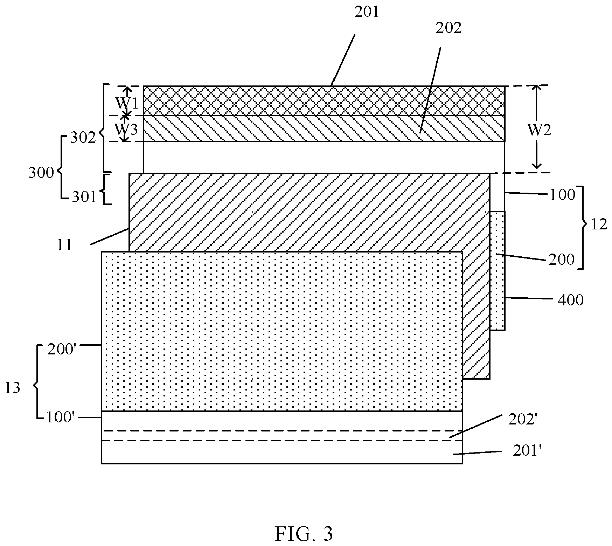

FIG. 3 is a plan view of the electrode assembly 1 according to an embodiment of this application. Descriptions of layers with same reference signs in FIG. 3 can be found in FIG. 2, and only differences are described below. The second electrode plate 13 is also shown in FIG. 3. The second electrode plate 13 and the first electrode plate 12 are opposite in polarity. As described above, one of the first electrode plate 12 and the second electrode plate 13 is a positive electrode plate, and the other of the first electrode plate 12 and the second electrode plate 13 is a negative electrode plate. The second electrode plate 13 may include a current collector 100' and an active material layer 200' disposed on the current collector 100'. A conductive layer 201' and an insulation layer 202' (shown in dashed lines) are provided on a surface of the current collector 100' that is on a side facing towards the separator 11 and that has no active material layer disposed thereon. For descriptions of the conductive layer 201' and the insulation layer 202', reference may be made to those of the conductive layer 201 and the insulation layer 202, and details are not repeated herein.

In some embodiments, the first electrode plate 12, the separator 11, and the second electrode plate 13 are stacked and wound in multiple layers around a first direction. The first direction is perpendicular to the winding direction, and the first zone 300 located at inner side of the winding structure and the first zone located at outer side of the winding structure are electrically connected through the conductive layers 201.

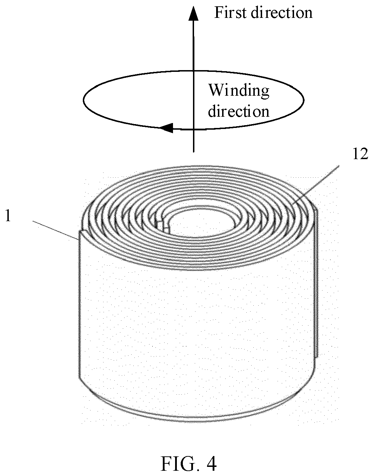

FIG. 4 is a three-dimensional schematic diagram of the electrode assembly 1 of an electrochemical apparatus of a winding structure. For simplicity, only the first electrode plate 12 is shown. In FIG. 4, the winding direction of the electrode assembly 1 of the electrochemical apparatus, that is, an extending direction of the electrode plate, is perpendicular to the first direction. Generally, the first direction may be parallel to a width direction of the current collector 100.

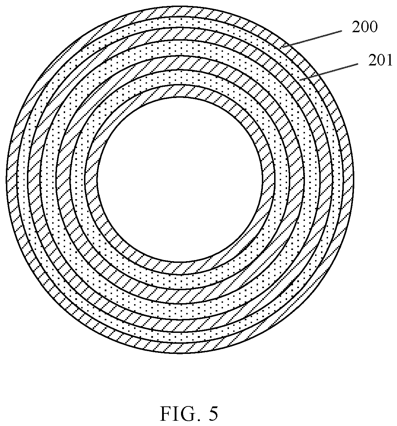

FIG. 5 is a vertical view of the electrode assembly 1 of an electrochemical apparatus of a winding structure. As shown in FIG. 5, the first zone 300 (not shown) of the current collector 200 located at inner side and the first zone 300 of the current collector 200 located at outer side of the winding structure are electrically connected through the conductive layer 201. The first zone 300 of the current collector 200 located at inner side and the first zone 300 of the current collector 200 located at outer side of the winding structure are electrically connected through the conductive layers 201, so that conductivity in the electrochemical apparatus may be improved.

In some embodiments, the first zones 300 located at adjacent layers of the winding structure are connected through the conductive layers 201. The adjacent layers herein refer to adjacent layers after the same electrode plate is wound or adjacent layers having a same polarity. Therefore, the first zones 300 located at adjacent layers of the winding structure are not only electrically connected through the conductive layers 201, but also physically connected through the conductive layers 201. This may further enhance structural stability of the electrochemical apparatus, and helps absorb stress caused by the winding of the electrode plate.

In some embodiments, a thickness of the conductive layer 201 is 100 μm to 500 μm. A too-small thickness of the conductive layer 201 may not guarantee the bonding effect of the conductive layer 201. A too-large thickness of the conductive layer 201 may adversely affect the winding flatness of the electrochemical apparatus, and a too-large distance between the positive and negative electrode plates may affect the electrochemical performance.

In some embodiments, the first zone 300 is located at an end part of the current collector 100 in the first direction. Referring to FIG. 2, the first zone 300 is located at an end part of the current collector 100 in the first direction.

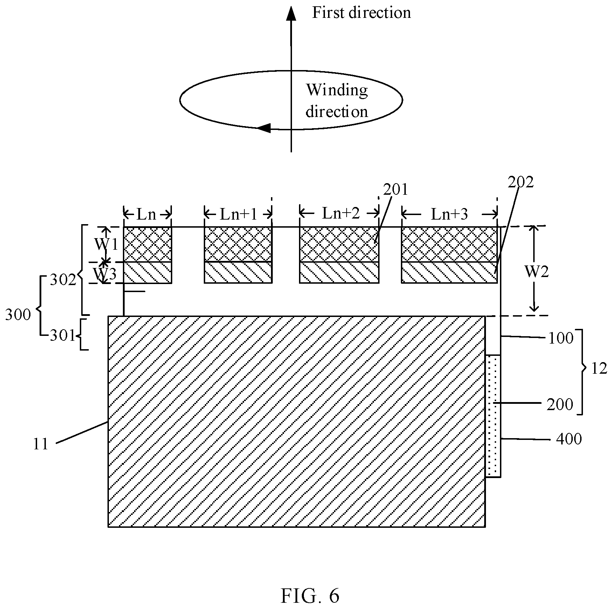

In some embodiments, the conductive layers 201 are arranged spaced apart from each other in the winding direction. In some embodiments, the conductive layers 201 are arranged spaced apart from each other in the first direction. FIG. 6 is a plan view of the electrode assembly 1 of an electrochemical apparatus according to an embodiment of this application. As shown in FIG. 6, the conductive layers 201 are arranged spaced apart from each other in the winding direction. Similarly, the conductive layers 201 may be alternatively arranged spaced apart from each other in the first direction, or arranged spaced apart from each other both in the winding direction and in the first direction.

In some embodiments, as shown in FIG. 6, the insulation layers 202 are arranged spaced apart from each other in the winding direction. Similarly, the insulation layers 202 may be alternatively arranged spaced apart from each other in the first direction. In some embodiments, the insulation layer 202 is provided correspondingly to the conductive layer 202. In this way, the insulation layer 202 may take advantage of its insulation performance, a coating area of the active material may be maximized, and volumetric energy density of the electrochemical apparatus may be increased.

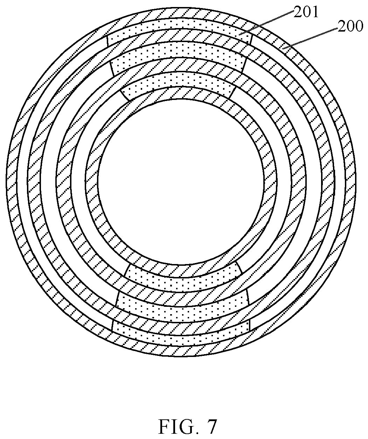

In some embodiments, the conductive layers 201 present a plurality of fan-shaped zones from inner sides to outer sides of the winding structure. As shown in FIG. 7, the conductive layers 201 present a plurality of fan-shaped zones from inner sides to outer sides of the winding structure. In some embodiments, a discontinuous coating method is used for both the conductive layer 201 and the insulation layer 202, with coating lengths changing regularly. The lengths of the conductive layer 201 and the insulation layer 202 satisfy the following formula:

$$L_n = L_{n+1} \text{ (N is an odd)} \qquad L_{n+2} = 1.5L_n \text{ (N is an odd)}$$

$$L_{n+2} = L_{n+3} \text{ (N is an odd)} \qquad L_{n+3} = 1.5L_{n+1} \text{ (N is an odd)}$$

$$L_{n+4} = L_{n+5} \text{ (N is an odd)} \qquad L_{n+4} = 1.5L_{n+2} \text{ (N is an odd)}$$

$$L_{n+6} = L_{n+7} \text{ (N is an odd)} \qquad L_{n+5} = 1.5L_{n+3} \text{ (N is an odd)}$$

where $L_n$, $L_{n+1}$, ..., $L_{n+7}$ are coating lengths of the conductive layer 201 and the insulation layer 202, and $L_n$ to $L_{n+3}$ are shown schematically in FIG. 6. In this way, a pattern of the conductive layer 201 in a fan shape may be formed as shown in FIG. 7.

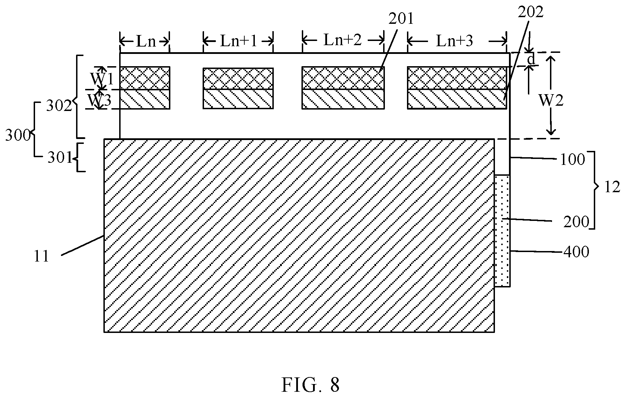

In some embodiments, a distance d between an edge of the first zone 300 that is farther away from the active material layer 200 and an edge of the conductive layer 201 that is farther away from the active material layer 200 satisfies $0 \le d \le W2-W1$. As shown in FIG. 8, a distance d between an edge of the first zone 300 that is farther away from the active material layer 200 and an edge of the conductive layer 201 that is farther away from the active material layer 200 is shown. In such an embodiment, the current collector 100 protrudes with respect to the conductive layer 201. In this way, it is easier to electrically connect the current collector 100 to an external connecting element (for example, current collector plate, or the like).

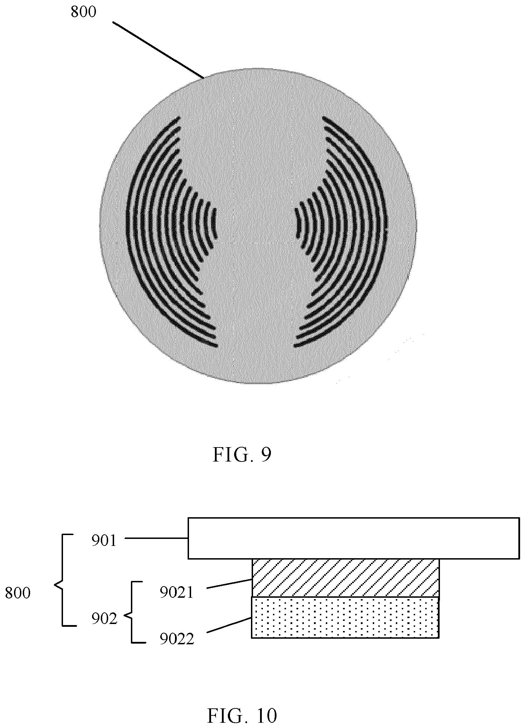

In some embodiments, the electrochemical apparatus further includes a current collector plate 800, where the current collector plate 800 is electrically connected to the current collector 100. FIG. 9 schematically shows a plan view of the current collector plate 800.

In some embodiments, as shown in FIG. 10, the current collector plate 800 includes a top plate 901 and a protrusion 902 disposed on the top plate 901. In some embodiments, the protrusion 902 is located between the first zones 300 of adjacent layers of the winding structure. In some embodiments, a projection of the protrusion 902 on the top plate 901 and a projection of the conductive layer 201 on the top plate 901 coincide or do not coincide. In some embodiments, the protrusion 902 includes a conductive part 9021 and an insulating part 9022, where the conductive part 9021 is located between the top plate 901 and the insulating part 9022, and the conductive part 9021 is electrically connected to the first zone 300. In some embodiments, the pattern of the protrusion 902 of the current collector plate 800 (as shown in FIG. 9) and the fan-shaped pattern of the conductive layer 201 are matched with each other, thereby further enhancing the structural stability of the electrochemical apparatus, so that the electrical connection between the electrode plate and the current collector plate is more secure, and not easy to fall off or detach. In addition, structures of the top plate 901 and the conductive part 9021 of the current collector plate 800 may improve heat dissipation of the electrode assembly, which is beneficial to improving rate performance of the electrochemical apparatus.

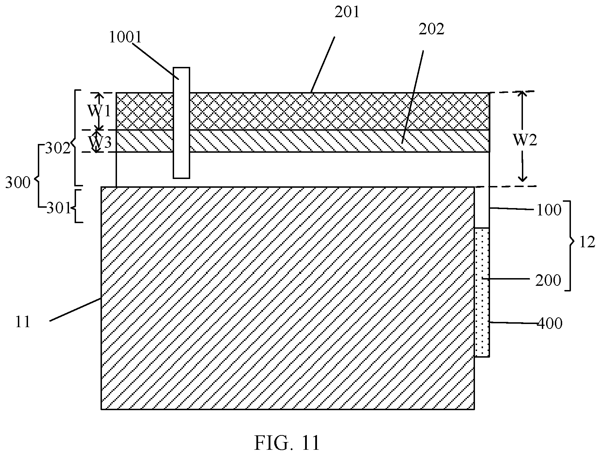

As shown in FIG. 11, in some embodiments, the electrochemical apparatus further includes a connecting piece 1001, where the connecting piece 1001 is electrically connected to the first zone 300. In some embodiments, the connecting piece 1001 may be electrically connected to the current collector 100 corresponding to a location at which the active material layer 200 is formed. In this case, the active material layers 200 at locations at which the connecting piece 1001 is in contact with the current collector 100 are removed.

In some embodiments, the conductive layer 201 includes a conductive particle, where the conductive particle includes at least one of a silver particle, a gold particle, a copper particle, or a carbon material. In some embodiments, the conductive particle serves as conductive filler and is added to a resin system (for example, epoxy resin, phenolic resin, polyimide, polyurethane) to form a material of the conductive layer 201. In some embodiments, the carbon material may include one or more of carbon nanotubes, conductive carbon black, or graphene. With the addition of these conductive particles, conductivity of the conductive layer 201 may be improved, internal resistance of the electrode assembly may be reduced, and the rate performance of the electrochemical apparatus may be enhanced, without reducing the bonding strength of the conductive layer 201.

As described above, one of the first electrode plate 12 and the second electrode plate 13 is a positive electrode plate, and the other of the first electrode plate 12 and the second electrode plate 13 is a negative electrode plate. In some embodiments, a positive electrode current collector of the positive electrode plate may be made of an aluminum (Al) foil. Certainly, other positive electrode current collectors commonly used in the prior art may alternatively be used. In some embodiments, a thickness of the positive electrode current collector may be 1 $\mu$m to 200 $\mu$m.

In some embodiments, an active material in an active material layer of the positive electrode plate may include at least one of lithium cobaltate, lithium manganate, lithium iron phosphate, lithium nickel cobalt manganate, lithium nickel cobalt aluminate, or lithium nickel manganate. In some embodiments, the active material layer of the positive electrode plate further includes a conductive agent. In some embodiments, the conductive agent in the active material layer of the positive electrode plate may include at least one of conductive carbon black, Ketjen black, lamellar graphite, graphene, carbon nanotubes, or carbon fibers. In some embodiments, a mass ratio of the positive electrode active material to the conductive agent to a binder in the active material layer of the positive electrode plate may be 91-99:0.5-3:0.5-6. It should be understood that the descriptions above are merely examples, and any other suitable materials, thicknesses, and mass ratios may be used for the active material layer of the positive electrode plate.

In some embodiments, a negative current collector of the negative electrode plate may use at least one of a copper foil, a nickel foil, or a carbon-based current collector, or certainly, may use other negative current collectors commonly used in the art. In some embodiments, a thickness of the negative electrode current collector may be 1 $\mu$m to 200 $\mu$m.

In some embodiments, an active material in an active material layer of the negative electrode plate may include at least one of artificial graphite, natural graphite, hard carbon, meso-carbon microbeads, silicon alloy, tin alloy, or pure silicon. In some embodiments, the active material layer of the negative electrode plate further includes a conductive agent. The conductive agent in the active material layer of the negative electrode plate may include at least one of conductive carbon black, Ketjen black, laminated graphite, graphene, carbon nanotubes, or carbon fiber. It should be understood that the materials disclosed above are merely examples, and any other suitable materials may be used for the active material layer of the negative electrode plate. In some embodiments, a mass ratio of the active material to the conductive agent to a binder in the active material layer of the negative electrode plate may be 91-99:0-3:1-6. It should be understood that the foregoing descriptions are merely examples, and any other suitable mass ratio may be used.

In some embodiments, the separator 11 includes at least one of polyethylene, polypropylene, polyvinylidene fluoride, polyethylene terephthalate, polyimide, or aramid. For example, the polyethylene includes at least one selected from high-density polyethylene, low-density polyethylene, or ultra-high molecular weight polyethylene. In particular, polyethylene and polypropylene have a good effect on preventing a short circuit, and may improve stability of a battery through a turn-off effect. In some embodiments, a thickness of the separator is in a range of about 5 $\mu$m to 20 $\mu$m.

In some embodiments, a surface of the separator may further include a porous layer. The porous layer is disposed on at least one surface of the separator and includes inorganic particles and a binder, where the inorganic particles are selected from at least one of aluminum oxide, silicon dioxide, magnesium oxide, titanium dioxide, hafnium dioxide, stannic oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide, or barium sulfate. In some embodiments, pores of the separator have diameters in a range of about 0.01 $\mu$m to 1 $\mu$m. A binder for the porous layer is selected from at least one of polyvinylidene fluoride, a vinylidene fluoride-hexafluoropropylene copolymer, polyamide, polyacrylonitrile, a polyacrylic ester, polyacrylic acid, a polyacrylic salt, carboxyl methyl cellulose, polyvinylpyrrolidone, polyvinyl ether, polymethyl methacrylate, polytetrafluoroethylene, or polyhexafluoropropylene. The porous layer on a surface of the separator may improve heat resistance, oxidation resistance and electrolyte infiltration performance of the separator, enhancing adhesion between the separator and an electrode plate.

In some embodiments of this application, an electrode assembly of the electrochemical apparatus is a wound electrode assembly or a stacked electrode assembly.

In some embodiments, the electrochemical apparatus includes a lithium-ion battery. However, this application is not limited thereto. In some embodiments, the electrochemical apparatus may further include an electrolyte. In some embodiments, the electrolyte may be one or more of a gel electrolyte, a solid electrolyte, and a liquid electrolyte, and the liquid electrolyte includes a lithium salt and a non-aqueous solvent. The lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB or lithium difluoroborate. For example, $LiPF_6$ is selected as the lithium salt because it may provide high ionic conductivity and improve a cycle characteristic.

The non-aqueous solvent may be selected from a carbonate compound, a carboxylate compound, an ether compound, another organic solvent, or a combination thereof.

The carbonate compound may be selected from a linear carbonate compound, a cyclic carbonate compound, a fluorocarbonate compound, or a combination thereof.

The linear carbonate compound may be selected from diethyl carbonate (DEC), dimethyl carbonate (DMC), dipropyl carbonate (DPC), methyl propyl carbonate (MPC), ethylene propyl carbonate (EPC), ethyl methyl carbonate (MEC), or a combination thereof. The cyclic carbonate compound may be selected from ethylene carbonate (EC), propylene carbonate (PC), butylene carbonate (BC), vinyl ethylene carbonate (VEC), or a combination thereof. The fluorocarbonate compound may be selected from fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-(trifluoromethyl)-1,3-dioxolan-2-one, or a combination thereof.

The carboxylate compound may be selected from methyl acetate, ethyl acetate, n-propyl acetate, tert-butyl acetate, methyl propionate, ethyl propionate, propyl propionate, γ-butyrolactone ester, caprolactone, valerolactone, mevalonolactone, caprolactone, methyl formate, or a combination thereof.

The ether compound may be selected from dibutyl ether, tetraglyme, diglyme, 1,2-dimethoxyethane, 1,2-diethoxyethane, ethoxymethoxyethane, 2-methyltetrahydrofuran, tetrahydrofuran, or a combination thereof.

The another organic solvent may be selected from dimethyl sulfoxide, 1,2-dioxolane, sulfolane, methyl sulfolane, 1,3-dimethyl-2-imidazolidinone, N-methyl -2-pyrrolidone, formamide, dimethylformamide, acetonitrile, trimethyl phosphate, triethyl phosphate, trioctyl phosphate, phosphate ester, or a combination thereof.

In some embodiments of this application, taking a lithium-ion battery as an example, a positive electrode plate, a separator, and a negative electrode plate are wound or stacked in order to form an electrode assembly that is then loaded into, for example, an aluminum-plastic film for packaging, an electrolyte is injected inside, and the lithium-ion battery is obtained after chemical conversion and packaging. Then, a performance test is performed on the prepared lithium-ion battery. For example, the following example shows an exemplary method for preparing a lithium-ion battery.

**Example**

Preparation of a positive electrode plate: A positive electrode active material lithium cobaltates, a conductive agent-conductive carbon black, and a binder polyvinylidene fluoride (PVDF) were dissolved in an N-methylpyrrolidone (NMP) solution at a weight ratio of 97.6:1.1:1.3, to form a positive electrode slurry. An aluminum foil was used as a positive electrode current collector, and the positive electrode slurry was applied on the positive electrode current collector. From the edge along the width direction of the positive electrode current collector, the positive electrode slurry was applied on the conductive layer and the insulation layer in turn. The width W1 of the conductive layer was half of the width W2 of the second zone, the coating width W3 of the insulation layer was one-fifth of W1, and the thickness of both the conductive layer and the insulation layer was 0.2 μm. Processes of drying, cold pressing, and slitting were performed to obtain the positive electrode plate.

Preparation of a negative electrode plate: A negative electrode active material artificial graphite and a binder styrene-butadiene rubber were dissolved in deionized water at a weight ratio of 98:2, to form a negative electrode slurry. A copper foil was used as a negative current collector, and the negative electrode slurry was applied on the negative current collector with a thickness of 2 μm. Processes of drying, cold pressing, and slitting were performed to obtain the negative electrode plate.

Preparation of a separator: Polyethylene (PE) with a thickness of 8 μm was used as a base material of the separator, two sides of the base material of the separator were coated with aluminum oxide ceramic layers 2 μm in thickness, and finally, the two sides coated with the ceramic layers were respectively coated with 2.5 mg of binder polyvinylidene fluoride (PVDF), followed by drying.

Preparation of a liquid electrolyte: Under an environment with a water content less than 10 ppm, lithium hexafluorophosphate and a non-aqueous organic solvent (a weight ratio of ethylene carbonate (EC) to diethyl carbonate (DEC) was equal to 40:60) were mixed at a weight ratio of 8:92 to prepare the liquid electrolyte.

Preparation of a lithium-ion battery: The positive electrode plate, the separator, and the negative electrode plate were stacked in sequence, so that the separator was disposed between the positive electrode plate and the negative electrode plate for separation, and winding was performed to obtain an electrode assembly. The electrode assembly was arranged in an outer packaging aluminum-plastic film, and was dehydrated at a temperature of 80°C After that, the above-mentioned liquid electrolyte was injected and packaged, followed by processes such as formation, degassing, and trimming, so that the lithium-ion battery was obtained.

Those skilled in the art will understand that a preparation method for the electrochemical apparatus (for example, a lithium-ion battery) described above is merely an example. Without departing from the content disclosed in this application, other methods commonly used in the art may be adopted.

An embodiment of this application further provides an electronic apparatus including the foregoing electrochemical apparatus, where the electrochemical apparatus is configured to supply power to the electronic apparatus. The electronic apparatus according to the embodiment of this application is not particularly limited, and may be any known electronic apparatus for use in the prior art. In some embodiments, the electrochemical apparatus may include, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The above descriptions are only preferred embodiments of this application and explanations of the applied technical principles. Those skilled in the art should understand that the scope of disclosure involved in this application is not limited to the technical solutions formed by the specific combination of the above technical features, and should also cover other technical solutions formed by any combination of the above technical features or their equivalent features. For example, the technical solution formed by replacement between the above features and the technical features having similar functions disclosed in this application.

## Claims

1. An electrochemical apparatus, comprising an electrode assembly, **characterized in that**, the electrode assembly comprises:

   a first electrode plate;
   a second electrode plate; and
   a separator disposed between the first electrode plate and the second electrode plate;
   wherein the first electrode plate comprises a current collector and an active material layer, the current collector comprises a first zone and a second zone, the second zone is provided with the active material layer, the first zone comprises a third zone and a fourth zone, the third zone is arranged in overlap with the separator, and the fourth zone is provided with a conductive layer.

2. The electrochemical apparatus according to claim 1, **characterized in that**, the first electrode plate further comprises an insulation layer disposed on the first zone, and the insulation layer is located between the conductive layer and the active material layer.

3. The electrochemical apparatus according to claim 2, **characterized in that**, the conductive layer has a first width, the fourth zone has a second width, and the first width is less than or equal to the second width.

4. The electrochemical apparatus according to claim 3, **characterized in that**, the insulation layer has a third width, and the third width is less than or equal to a quarter of the first width.

5. The electrochemical apparatus according to claim 2, **characterized in that**, a difference between a thickness of the conductive layer and a thickness of the insulation layer is less than or equal to 30 $\mu$m.

6. The electrochemical apparatus according to claim 2, **characterized in that**, the insulation layer comprises at least one of an inorganic particle or a binder, and the inorganic particle comprises at least one of aluminum oxide, silicon dioxide, magnesium oxide, barium titanate, titanium dioxide, zirconium dioxide, barium oxide, magnesium hydroxide, or boehmite.

7. The electrochemical apparatus according to claim 1, **characterized in that**, the first electrode plate, the separator and the second electrode plate are stacked and wound in multiple layers around a first direction along a winding direction, the first direction is perpendicular to the winding direction, and the first zone located at an inner side of a winding structure and the first zone located at an outer side of the winding structure are electrically connected through the conductive layers.

8. The electrochemical apparatus according to claim 7, **characterized in that**, the first zones located at adjacent layers of the winding structure are connected through the conductive layers.

9. The electrochemical apparatus according to claim 7, **characterized in that**, a thickness of the conductive layer is 100 $\mu$m to 500 $\mu$m.

10. The electrochemical apparatus according to claim 7, **characterized in that**, the first zone is located at an end part of the current collector in the first direction.

11. The electrochemical apparatus according to claim 7, **characterized in that**, the conductive layer satisfies at least one of the following characteristics:

the conductive layers are arranged spaced apart from each other in the winding direction; or
the conductive layers are arranged spaced apart from each other in the first direction.

12. The electrochemical apparatus according to claim 7 or 11, **characterized in that**, the insulation layer satisfies at least one of the following characteristics:

the insulation layers are arranged spaced apart from each other in the winding direction; or
the insulation layers are arranged spaced apart from each other in the first direction.

13. The electrochemical apparatus according to claim 11, **characterized in that**, the conductive layers show a plurality of fan-shaped zones from inner sides to outer sides of the winding structure.

14. The electrochemical apparatus according to claim 7, **characterized in that**, a distance d between an edge of the first zone farther away from the active material layer and an edge of the conductive layer farther away from the active material layer satisfies $0 \leq d \leq$ a difference between the second width and the first width.

15. The electrochemical apparatus according to claim 7, **characterized in that**, the electrochemical apparatus further comprises a current collector plate, the current collector plate is electrically connected to the current collector, the current collector plate comprises a top plate and a protrusion disposed on the top plate; and the protrusion is located between the first zones of adjacent layers of the winding structure.

16. The electrochemical apparatus according to claim 15, **characterized in that**, the protrusion comprises a conductive part and an insulating part, the conductive part is located between the top plate and the insulating part, and the conductive part is electrically connected to the first zone.

17. The electrochemical apparatus according to claim 1, **characterized in that**, the electrochemical apparatus further comprises a connecting piece, and the connecting piece is electrically connected to the first zone.

18. The electrochemical apparatus according to claim 1, **characterized in that**, the conductive layer comprises a conductive particle, and the conductive particle comprises at least one of a silver particle, a gold particle, a copper particle, or a carbon material.

19. An electronic apparatus, comprising the electrochemical apparatus according to any one of claims 1 to 18, wherein the electrochemical apparatus is configured to supply power to the electronic apparatus.

FIG. 1

FIG. 2

201
202
W1
W3
302
300
301
W2
100
12
200
11
400
200'
13
100'
202'
201'

FIG. 3

First direction

Winding
direction

12

1

FIG. 4

FIG. 5

FIG. 6

201

200

FIG. 7

FIG. 8

FIG. 9

FIG. 10

FIG. 11

## INTERNATIONAL SEARCH REPORT

| International application No. |
| --- |
| **PCT/CN2020/117035** |

| A. | CLASSIFICATION OF SUBJECT MATTER |
| --- | --- |
| | H01M 10/0587(2010.01)i; H01M 4/02(2006.01)i |

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

EPTXT; USTXT; VEN; WOTXT; CNABS; CNTXT; CNKI: 电池, 极片, 集流体, 导电, 稳定, 绝缘, 粘结, battery, cell, pole piece, current collector, conductive, stable, insulation, bond

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| Y | CN 208955106 U (NINGDE CONTEMPORARY AMPEREX TECHNOLOGY CO., LTD.) 07 June 2019 (2019-06-07) description, paragraphs 48-84, and figures 1-15 | 1-6, 17-19 |
| Y | CN 110828775 A (JIANGSU ZHUOGAO NEW MATERIAL TECHNOLOGY CO., LTD.) 21 February 2020 (2020-02-21) description paragraphs 77-98, figure 4 | 1-6, 17-19 |
| Y | CN 208955123 U (NINGDE CONTEMPORARY AMPEREX TECHNOLOGY CO., LTD.) 07 June 2019 (2019-06-07) description, paragraphs 48-84, and figures 1-14 | 1-6, 17-19 |
| Y | CN 108531118 A (SHENZHEN RUILONG NEW ENERGY TECHNOLOGY CO., LTD.) 14 September 2018 (2018-09-14) description, paragraphs 27-51, and figures 1-2 | 1-6, 17-19 |
| A | CN 111668431 A (HUIZHOU LIWINON ENERGY TECHNOLOGY CO., LTD.) 15 September 2020 (2020-09-15) entire document | 1-19 |
| A | US 2019013510 A1 (APPLE INC.) 10 January 2019 (2019-01-10) entire document | 1-19 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 June 2021** | **25 June 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/117035**

| Patent document cited in search report | | | Publication date (day/month/year) | Patent family member(s) | | | Publication date (day/month/year) |
|---|---|---|---|---|---|---|---|
| CN | 208955106 | U | 07 June 2019 | CN | 110660956 | A | 07 January 2020 |
| | | | | WO | 2020077740 | A1 | 23 April 2020 |
| | | | | EP | 3719876 | A1 | 07 October 2020 |
| | | | | US | 2020212449 | A1 | 02 July 2020 |
| CN | 110828775 | A | 21 February 2020 | CN | 211654939 | U | 09 October 2020 |
| CN | 208955123 | U | 07 June 2019 | None | | | |
| CN | 108531118 | A | 14 September 2018 | None | | | |
| CN | 111668431 | A | 15 September 2020 | CN | 212366139 | U | 15 January 2021 |
| US | 2019013510 | A1 | 10 January 2019 | None | | | |

Form PCT/ISA/210 (patent family annex) (January 2015)